Europäisches Patentamt

European Patent Office

Office européen des brevets

(11) Publication number: **0 123 953**
**B1**

(12) **EUROPEAN PATENT SPECIFICATION**

(45) Date of publication of patent specification: **02.12.87**

(51) Int. Cl.⁴: **G 09 F 3/02, B 31 D 1/02**

(21) Application number: **84103694.0**

(22) Date of filing: **04.04.84**

(54) **Flat laminate part consisting of a substrate layer, a cover layer and an auxiliary pull-off means for the cover layer.**

(30) Priority: **27.04.83 DE 3315271**

(43) Date of publication of application:
**07.11.84 Bulletin 84/45**

(45) Publication of the grant of the patent:
**02.12.87 Bulletin 87/49**

(84) Designated Contracting States:
**AT BE CH DE FR GB IT LI LU NL SE**

(56) References cited:
**EP-A-0 011 163**
**GB-A- 828 383**
**US-A-3 230 649**

(73) Proprietor: **LOHMANN GmbH & CO KG**
**Irlicher Strasse 55**
**D-5450 Neuwied 12 (DE)**

(73) Proprietor: **Sanol Schwarz GmbH**
**Mittelstrasse 11-13**
**D-4019 Monheim (DE)**

(72) Inventor: **Gockel, Karl-Heinz**
**von-Gahlen-Strasse 16**
**D-5650 Solingen-Gräfrath (DE)**
Inventor: **Anhäuser, Dieter**
**Rengsdorfer Strasse 4**
**D-5451 Melsbach (DE)**
Inventor: **Hoffmann, Hans Rainer, Dr.**
**Burghofstrasse 113**
**D-5450 Neuwied 22 (DE)**
Inventor: **Reinhold, Karl-Heinz**
**Reuschenbach Bergstrasse 6**
**D-5461 Hausen (DE)**

(74) Representative: **Redies, Bernd, Dr. rer. nat.**
**COHAUSZ & FLORACK Patentanwaltsbüro**
**Schumannstrasse 97 Postfach 14 01 47**
**D-4000 Düsseldorf 1 (DE)**

Courier Press, Leamington Spa, England.

**Description**

The present invention is related to flat laminate parts consisting of a substrate layer and a cover layer having additionally an auxiliary pull-off means for the cover layer or parts thereof.

It is often necessary to protect one or both surfaces of a flat substrate or one or both open surfaces of a flat laminate, by a cover layer before the final use thereof. Such a cover layer is necessary for instance due to the adhesive properties of this surface or its sensitivity to mechanical damage or in order to avoid evaporation of highly volatile components from a layer by way of such a surface. The cover layer in general is kept to the substrate layer by adhesive additions to the surface layer or by the self-adhesive properties of the surface of the substrate layer which adhesive forces may be overcome by the application of mechanical pull-off forces. The problem with such compositions is to make the combination of the substrate layer and the cover layer such that both layers are securely held together but the pull-off of the cover layer or of parts thereof is easy and readily possible.

There are known already several propositions to solve this problem. Thus, a mere tearing of the laminate allows to use the finger nail to grasp a part of the cover layer and pull it off from the substrate layer and by using this part of the cover layer as grasp part to thereby allow a complete pull-off of the cover layer. It is furthermore known to compose the cover layer of several parts with a total surface larger than the surface of the substrate layer thereby producing overlapping parts in the surface of the cover layer which overlapping parts are used as grasp parts and auxiliary pull-off means in the cover layer. If no such overlapping parts are provided in the cover layer, grasp parts in the cover layer are known to be produced by sharply bending the laminate at one or several of its edges thereby causing the cover layer to be solved from the substrate layer at such edges if the cover layer is rigid enough to produce sufficient pull-off forces by such rigidity. Another known possibility to produce grasp parts is to provide in the cover layer one or several unilaterally curved cuts; upon bending the laminate to form a convex curvature of the surface of the cover layer said parts produce an auxiliary pull-off means in the cover layer (US—A—3 230 649) which however allow to pull-off the cover layer only to one side. Still another known possibility to produce grasp parts for the cover layer is to cover the substrate layer by a cover layer larger than the substrate layer. Furthermore, another known means to ease the pull-off of the cover layer from the substrate layer is to produce linear cuts or preset linear breaking lines in the cover layer allowing to produce lines in the cover layer by pulling and bending the laminate wherefrom the pull-off of the cover layer may be started (see GB—A—828 383). Still furthermore, it is known to incorporate into the laminate a wire or a strap between the cover layer and the substrate layer said wire or strap projecting over the edges of the laminate which wire or strap serves as an auxiliary pull-off means for the cover layer from the substrate layer.

All these proposals to solve the problem are not satisfactory because they either necessitate additional material or complicated procedures to produce them or do not give a sufficient large grasp part to easily pull-off the cover layer from the adhering substrate layer.

It is therefore an object of the present invention to provide an embodiment for an auxiliary pull-off means for the cover layer or parts thereof in such flat laminate parts which are easy to produce and allow a ready and safe pull-off from the cover layer and avoid the above mentioned disadvantages.

The flat laminate part according to the present invention consists of a substrate layer and a cover layer on both surfaces of the substrate layer or, preferably, on one side thereof, the adhesive compounding between the substrate layer and the cover layer or layers being such that both the substrate layer and the cover layer or layers are securely held together, but a pull-off of the cover layer or layers from the substrate layer is readily possible by hand or mechanically, i.e. the adhesiveness between the surface or surfaces of the substrate layer and the cover layer or layers covering said substrate layer is such that the cover layer or layers securely stick to the substrate layer and at the same time may be pulled off readily by the application of limited mechanical forces, for instance by holding the laminate part in the one hand and grasping the cover layer with the other hand or by using usual pull-off machines. The flat laminate part according to the present invention additionally has a grasp part as auxiliary pull-off means at the cover layer or layers to so pull-off the cover layer or layers or parts of the cover layer mechanically along cuts or preset breaking lines in the cover layer or layers surrounding said grasp part said grasp part being exposed by bending the laminate substantially along said preset cut or preset breaking line to form a convex curvature of the surface of the cover layer. In accordance with the present invention,

a) said preset cut or preset breaking line in said cover layer extends continuously from one edge to another edge of said cover layer thereby separating the cover layer into two parts;

b) at least parts of said cut or breaking line substantially divert from a straight connection line between the end points of the cut or breaking line at the edges of the cover layer into each part of said cover layer; and

c) the flexibility of said cover layer and the adhesion between said substrate layer and said cover layer being such that, upon bending of the flat laminate part substantially along said straight connection line between the end points of said cut at the edges of said cover layer in a direction which produces a convex curvature of the exposed surface convexly on the side of the cover layer, said diverting parts of said cut line into each part of the cover layer are separated and peeled off from the substrate layer to form thereby a grasp part for each cover layer part.

The invention is further illustrated by means of the attached drawings without however limiting the same thereto.

Figure 1 shows a top view of the cover layer of a quadrangular part of the flat laminate according to the present invention.

Figure 2 shows a perspective view of the bent laminate part of Figure 1.

Figures 3 to 5 show the top views of the cover layer of other embodiments of the flat laminate part according to the present invention.

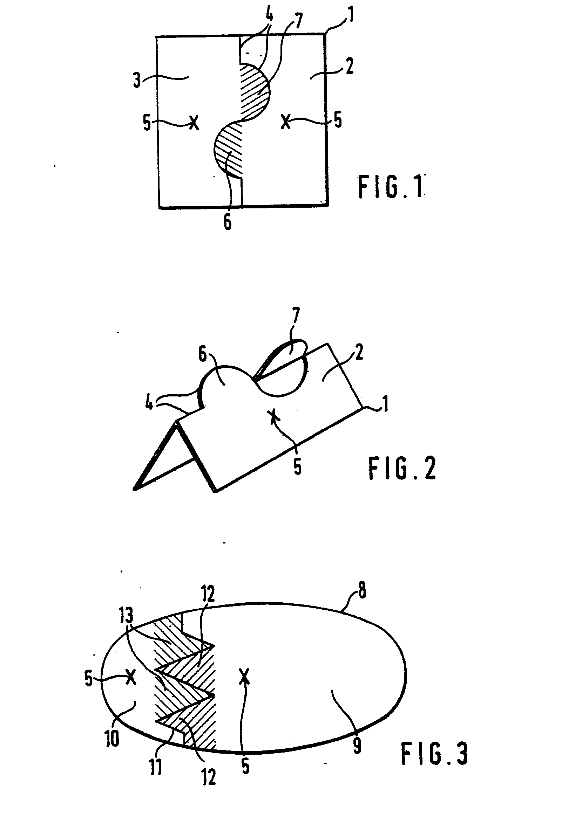

In Figure 1, (1) is the quadrangular laminate part as such. The cover layer of this laminate part is subdivided by the preset cut or preset breaking line (4) into two partial surface areas (2) and (3). The preset cut or preset breaking line (4) runs from one edge of the laminate part to the opposite edge thereof and partially has the form of a sinusoid (sine curve). This sine curve defines the hatched or shaded surface area (6) as grasp or pick-up part for the partial surface area (2) of the cover layer and the hatched area (7) as grasp part of the partial surface area (3) of the cover layer. The crosses (5) characterize those areas, wherein the forces producing the bending of the laminate part and thereby producing the exposition of the grasp parts (6) and (7), are to be applied. A perspective illustration of the bent quadrangular laminate part is given in Figure 2. The numbers contained therein have the same meaning as in Figure 1. The exposed grasp parts (6) and (7) are readily recognizable and show that the pull-off of the surface areas (2) and (3) by hand or mechanically is readily possible.

Figure 3 shows an oval-shaped embodiment (8) of a laminate part according to the present invention. The cover layer thereof is subdivided asymmetrically by a preset cut or preset breaking line (11) in the partial surface areas (9) and (10) different in surface area from the other. The preset cut or preset breaking line (11) connects two opposite positions at the edge of the oval and is zigzag formed and produces the hatched surface area (12) as grasp part for the partial surface area (9) and the hatched area (13) as grasp part for the partial surface area (12). The zigzag form actually shown in Figure 3 may of course also be a mirror inversion which is true for many preset cut or, respectively, preset breaking line embodiments shown in the present Figures. If bending forces in Figure 3 attack in the areas defined with crosses (5), the grasp parts (12) and (13) are exposed and the partial or complete pull-off of the cover layer is readily possible.

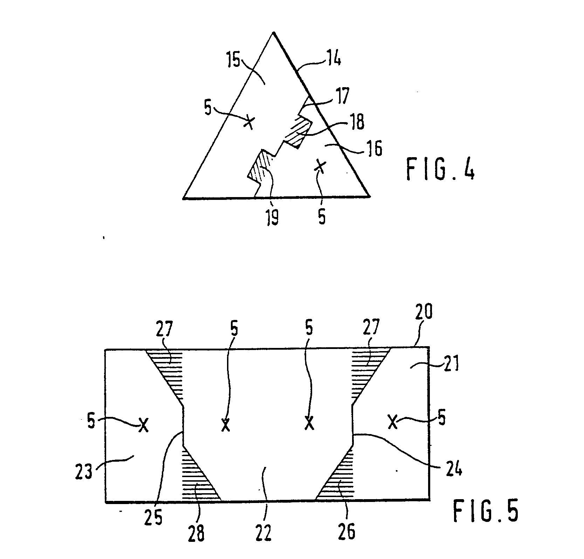

A triangular-shaped embodiment (14) of the laminate part according to the present invention is shown in Figure 4. In this embodiment the preset cut or, respectively, breaking line (17) runs from one edge of the triangular to one of the other edges thus subdividing the surface of the cover layer into the partial surface areas (15) and (16) different in surface size. The grasp parts (18) and (19) of this embodiment have a rectangular shape and become exposed upon the application of bending forces in the areas (5). The partial or complete pull-off of the cover layer may then occur by hand or mechanically.

A further embodiment of the present invention is shown in Figure 5. In this embodiment two preset cuts or breaking lines subdivide the surface of the cover layer of the laminate part (20) in three partial surface areas (21), (22) and (23). The preset cuts or breaking lines run from one of the longer edges of the rectangular shape to the other long side. The preset cuts or preset breaking lines are shaped angled such that the triangular grasp part (26) for the one outer surface area part (21), the triangular grasp part (27) for the middle partial area (22) and the grasp part (28) for the other outer partial surface area (23) is formed. The exposition of these grasp parts occurs after allowing bending forces to attack in the areas indicated with (5). The exposed grasp parts (26), (27) and (28) readily allow the partial or complete pull-off of the cover layer.

The Examples illustrated in the present drawings indicate that the present invention may have many various embodiments and is only limited by the definitions given in the following claims. Thus, a prerequisite of the present invention is that the cover layer is subdivided by the preset cuts or preset breaking lines in at least two partial surface areas, wherein the preset cuts or breaking lines connect two points at the edge of the laminate part.

The cover layer and/or the substrate layer may be composed of one or a multitude of individual layers. The raw materials used for the production of the substrate layer have to be flexible while they may be such for the cover layer to render it flexible or rigid. The partial or complete pull-off of the cover layer exposes the second surface of the substrate or parts thereof in order to allow the further use thereof or of the substrate. In a preferred embodiment, this surface of the substrate is finished with an adhesive thus allowing to fix the substrate to a suitable area after removal of the cover layer or parts thereof. The outer edge or contour of the laminate part may be varied and depends upon the necessities of the intended use thereof. The substrate may also have a cover layer on both of its surfaces. In accordance with the present invention, in this embodiment there may be provided preset cuts or preset breaking lines in both cover layers which allow the removal of one or both cover layers simultaneously or at differing times.

The preset cuts or preset breaking lines in the cover layer may be produced by methods known to the expert in the art, for instance by punching, cutting, pressing, squeezing, or stamping while the preset breaking lines are preferably produced by perforation, local chemical treatment or by the application of pull-off wires.

## Claims

1. Flat laminate part consisting of a substrate layer (1, 8, 14, 20, 29) and a cover layer the adhesive compounding between said substrate layer and said cover layer being such that both layers are securely held together, but a pull-off of said cover layer from said substrate layer is readily possible by hand or mechanically, said flat laminate part having additionally a grasp part as auxiliary pull-off means on the cover layer to so pull-off parts of said cover layer by hand or mechanically along a preset cut or, respectively, preset breaking line within the surface of said cover layer said grasp part being exposed by bending the laminate substantially along said preset cut to form a convex curvature of the surface of said cover layer, characterized in that

a) said preset cut or preset breaking line (4, 11, 17, 24, 25, 32) in said cover layer extends continuously from one edge to another edge of said cover layer thereby separating the cover layer into two parts (2, 3; 9, 10; 15, 16);

b) at least parts of said cut or breaking line substantially divert from a straight connection line between the end points of the cut or breaking line at the edges of the cover layer into each part of said cover layer; and

c) the flexibility of said cover layer and the adhesion between said substrate layer and said cover layer being such that, upon bending of the flat laminate part substantially along said straight connection line between the end points of said cut at the edges of said cover layer in a direction which produces a convex curvature of the exposed surface convexly on the side of the cover layer, said diverting parts (6, 7; 12, 13; 18, 19; 27, 28) of said cut line into each part of the cover layer are separated and peeled off from the substrate layer to form thereby a grasp part for each cover layer part.

2. Flat laminate part according to claim 1 wherein the cover layer has a plurality of preset cut or breaking lines (24, 25) thereby subdividing the cover layer into at least three parts by said preset cuts or said preset breaking lines.

3. Flat laminate part according to any of claims 1 to 3 having additionally a second cover layer on the opposite surface to the surface covered by the first cover layer, the adhesive compounding between said substrate layer and said second cover layer being the same as between said substrate layer and said first cover layer wherein preset cuts or preset breaking lines are provided in both cover layers.

## Patentansprüche

1. Flächenförmiger Laminatabschnitt, bestehend aus einem Substrat (1, 8, 14, 20, 29) und einer Abdeckung, wobei die Zusammensetzung des Klebstoffs zwischen diesem Substrat und dieser Abdeckung derart ist, daß beide Schichten sicher zusammengehalten werden, jedoch ein Abziehen dieser Abdeckung von diesem Substrat leicht durch Hand oder auf mechanische Weise möglich ist, der flächenförmige Laminatabschnitt zusätzlich einen Greifteil als Abziehhilfsmittel auf der Abdeckung aufweist, um so Teile der Abdeckung durch Hand oder mechanisch entlang eines Schnittes oder einer Sollbruchlinie in der Oberfläche dieser Abdeckung zu ermöglichen, wobei dieses Greifteil durch Biegen des Laminatabschnitts entlang diesen Schnitten unter Bildung einer konvexen Biegung der Oberfläche dieser Abdeckung freigelegt wird, dadurch gekennzeichnet, daß

a) dieser Schnitt oder diese Sollbruchlinie (4, 11, 17, 24, 25, 32) in dieser Abdeckung kontinuierlich von einer Kante zur anderen Kante dieser Abdeckung verläuft und dadurch die Abdeckung in zwei Teile (2, 3; 9, 10; 15, 16) aufteilt;

b) mindestens Teile dieses Schnittes oder dieser Sollbruchlinie wesentlich von einer geraden Verbindungslinie zwischen den Endpunkten des Schnittes oder der Sollbruchlinie an den Kanten der Abdeckung in jeden Teil dieser Abdeckung abweichen; und

c) die Flexibilität dieser Abdeckung und die Adhäsion zwischen diesem Substrat und dieser Abdeckung derart sind, daß beim Biegen des flächenförmigen Laminats im wesentlichen entlang dieser geraden Verbindungslinie zwischen den Endpunkten dieses Schnittes an den Kanten dieser Abdeckung in einer Richtung, die eine konvexe Kurvung der äußeren Oberfläche der Abdeckung produziert, diese abweichenden Teile (6, 7; 12, 13; 18, 19; 27, 28) dieser Schnittlinie in jeden Teil der Abdeckung vom Substrat getrennt und abgehoben werden unter Bildung eines Greifteils für jeden Teil der Abdeckung.

2. Flächenförmiges Laminatabschnitt gemäß Anspruch 1, dadurch gekennzeichnet, daß die Abdeckung eine Mehrzahl von Schnitten oder Sollbruchlinien (24, 25) aufweist und die Abdeckung in mindestens drei Teile durch diese Schnitte oder Sollbruchlinien aufteilt.

3. Flächenförmiger Laminatabschnitt gemäß Ansprüchen 1 oder 2, dadurch gekennzeichnet, daß sie zusätzlich eine zweite Abdeckung auf der Oberfläche gegenüberliegend zu der von der ersten Abdeckung abgedeckten Oberfläche aufweist, die Klebstoffzusammensetzung zwischen Substrat und der zweiten Abdeckung so ist, daß die Adhäsion gleich der Adhäsion zwischen Substrat und der ersten Abdeckung ist und Schnitt oder Sollbruchlinie in beiden Abdeckungen vorgesehen sind.

## Revendications

1. Partie plate d'un stratifié comprenant une couche de substrat (1, 8, 14, 20, 29) et une couche de revêtement, la liaison adhésive entre ladite couche de substrat et ladite couche de revêtement étant telle que les deux couches soient maintenues solidement ensemble, mais un arrachement de ladite couche de revêtement à partir de ladite couche de substrat est facilement possible à la main ou mécaniquement, ladite partie plate du stratifié ayant en outre une partie de préhension en qualité de moyen auxiliaire d'arrachement de la couche de revêtement afin d'arracher les parties de ladite couche de revêtement à la main ou mécaniquement suivant une découpe préalablement formée ou une ligne de rupture préalablement définie dans la surface de ladite couche de revêtement, ladite partie de préhension étant exposée par cintrage du stratifié sensiblement selon ladite découpe préalablement effectuée afin d'obtenir une courbure convexe de la surface de ladite couche de revêtement, caractérisé en ce que

a) ladite découpe ou ligne de rupture préalablement formée (4, 11, 17, 24, 25, 32) dans ladite couche de revêtement s'étend continuellement d'un bord à l'autre bord de ladite couche de revêtement pour ainsi séparer la couche de revêtement en deux parties (2, 3; 9, 10; 15, 16);

b) des parties au moins de ladite ligne de coupe ou de rupture dévient notablement à partir d'une ligne de liaison rectiligne entre les points terminaux de la ligne de coupe ou de rupture sur les bords de la couche de revêtement pour déboucher dans chaque partie de ladite couche de revêtement; et

c) la flexibilité de ladite couche de revêtement et l'adhérence entre ladite couche de substrat et ladite couche de revêtement étant telles que, lors du cintrage de la partie plate du stratifié, sensiblement le long de ladite ligne rectiligne de liaison entre les points terminaux de ladite découpe sur les bords de ladite couche de revêtement dans une direction produisant une courbure convexe de la surface exposée, de façon convexe sur le côté de la couche de revêtement, lesdites parties divergentes (6, 7; 12, 13; 18, 19; 27, 28) de ladite ligne de découpe débouchant dans chaque partie de la couche de revêtement soient séparées et détachées de la couche de substrat pour former ainsi une partie de préhension pour chaque partie de la couche de revêtement.

2. Partie plate de stratifié selon la revendication 1, dans laquelle la couche de revêtement présente une série de lignes préformées de coupe ou de rupture (24, 25) en subdivisant ainsi la couche de revêtement en trois parties au moins par lesdites lignes préformées de coupe ou de rupture.

3. Partie plate de stratifié selon l'une quelconque des revendications 1 ou 2, comportant en outre une seconde couche de revêtement sur la surface opposée à celle qui porte la première couche de revêtement, la liaison adhésive entre ladite couche de substrat et ladite seconde couche de revêtement étant la même entre ladite couche de substrat et ladite première couche de revêtement, des découpes ou des lignes de rupture préformées étant prévues dans les deux couches de revêtement.

FIG.1

FIG.2

FIG.3

FIG.4

FIG.5